# EUROPÄISCHE PATENTSCHRIFT

(11) **EP 2 127 329 B1**
(45) Veröffentlichungstag und Bekanntmachung des Hinweises auf die Patenterteilung: **27.04.2011**
(21) Anmeldenummer: 07801130.1
(22) Anmeldetag: 02.03.2007
(51) Int. Cl.: H04L 29/14, H04L 12/437

(54) **FILTERUNG VON REDUNDANTEN FRAMES IN EINEM NETZWERKKNOTEN**
FILTERING OF REDUNDANT FRAMES IN A NETWORK NODE
FILTRAGE DE TRAMES REDONDANTES DANS UN NOEUD DE RÉSEAU

(43) Veröffentlichungstag der Anmeldung: 02.12.2009
(73) Patentinhaber: Siemens Aktiengesellschaft, 80333 München (DE)
(72) Erfinder: BRÜCKNER, Dieter, 96199 Unterleiterbach (DE)
(86) Internationale Anmeldenummer: PCT/DE2007/000392
(87) Internationale Veröffentlichungsnummer: WO 2008/106906

(56) Entgegenhaltungen:
- EP-A- 1 657 888
- US-B1- 6 446 131

## Beschreibung

Die Erfindung betrifft ein Verfahren zur Filterung redundanter Frames, die zumindest eine MAC-Quelladresse, eine FrameID sowie einen CRC-Wert aufweisen, in einem Netzwerkknoten mit zumindest zwei Ports mit jeweils einer Sende- und einer Empfangseinrichtung, wobei die Sendeeinrichtung eine Sendeliste aufweist, in der zu sendende Frames gespeichert werden, und wobei die Empfangseinrichtung einen Empfangsspeicher zum Speichern eines empfangenen Frames aufweist.

Die Erfindung betrifft ferner einen Netzwerkknoten mit zumindest zwei Ports mit jeweils einer Sende- und einer Empfangseinrichtung, wobei die Sendeeinrichtung eine Sendeliste aufweist, in der zu sendende Frames gespeichert werden, und wobei die Empfangseinrichtung einen Empfangsspeicher zum Speichern eines empfangenen Frames aufweist.

Ein derartiges Verfahren kommt insbesondere bei hochverfügbaren Netzwerken zum Einsatz, in denen Frames redundant verschickt werden. Grundsätzlich müssen die Anforderungen, die in bisherigen Profibus-Netzen erfüllt werden, auch in aktuellen bzw. zukünftigen Profinet-Netzwerken realisierbar sein. Dies bedeutet, dass ein Gerätetausch bzw. die Erweiterung eines Netzwerkes durchgeführt werden kann, während das restliche Netzwerk weiterarbeitet (d.h. kein Verlust der Provider-Consumer-Beziehungen). Dies hat zur Folge, dass eine bisherige Profibus-Linie (Bus-Architektur) im Profinet-Umfeld (Punkt-zu-Punkt-Architektur) einer Ringtopologie entspricht.

Muss bei der Profibus-Linie ein Teilnehmer seinen Frame nur einmalig versenden und erreicht damit alle anderen Profibus-Teilnehmer, so wird im heutigen Profinet-Umfeld ein zyklischer Frame adressbasiert in beide Richtungen des Rings und damit doppelt versendet. Am Einspeiseknoten (Switch) wird dann dafür gesorgt dass dieser Frame wiederum von Netz gefiltert wird. Damit werden kreisende Telegramme im Ring vermieden (F-Bit Mechanismus).

Heutige Applikationen im Produktions- und Fertigungsumfeld fordern daher eine Fertigungseinheit ("Maschinen-Ring"), welche mit Profinet-Kommunikation ausgestattet wird, als Ringstruktur und damit hochverfügbar zu implementieren. Mehrere dieser Fertigungseinheiten sollen dann durch einen übergeordneten "Fabrik-Ring" miteinander gekoppelt werden. Die Kopplung selbst ist dabei ebenfalls redundant auszuführen.

Um die Anforderung nach Hochverfügbarkeit eines Netzwerkes zu erfüllen, müssen die Einzel-Ringe also zu gekoppelten Ringstrukturen verbunden werden. Dies führt dazu, dass Frames aus einem Ring aus- und wieder eingeleitet werden müssen. Mit dem heute implementierten Redundanzverfahren für zyklische Kommunikation, wird jedoch der im einfachen Ring umlaufende Original-Frame und dessen Duplikat, also beide, ausgeleitet. Damit werden im anschließenden Ring der Original- und Duplikat-Frame über beide Ports verdoppelt. Es entstehen somit vier gleiche zyklische Frames in der nachfolgenden Ringstruktur. Generell gilt, werden mehrere dieser Ringe hintereinander verschaltet, so verdoppelt sich die Anzahl der zyklischen Frames mit jeder Ringtopologie bzw. die zur Verfügung stehende Bandbreite für zyklischen Kommunikation halbiert sich bei jedem weiteren verschalteten Ring. Mit den geforderten Mengengerüsten ist damit eine zyklische Kommunikation nicht zu realisieren.

Die im Ring umlaufenden Frames werden am Einspeiseknoten durch den bisher implementierten F-Bit-Mechanismus aus dem Ring gefiltert. Dies bedeutet, dass jeder in den Ring eingespeiste zyklische Frame in einem Speicher des Einspeise- und Koppel-Switches gelernt werden muss und bei erneutem Empfang am Einspeise- bzw. Koppel-Switch wieder gefiltert wird. Entsprechende Ressourcen müssen dafür bereitgestellt werden, ansonsten ist ein Einspeisen des Frames nicht möglich.

Ein hochverfügbares Netzwerk bedeutet weiterhin, auch die Koppelknoten zwischen den Ringen redundant auszuführen. D.h. die Ringstrukturen sind an zwei bzw. mehreren Stellen miteinander gekoppelt (redundante Kopplung). In solchen redundant gekoppelten Ringstrukturen werden dann die zyklischen Frames über beide Koppelstrecken mehrfach in die nachfolgende Ringstruktur eingespeist und dort über beide Ports des Koppel-Switches versendet. Zwar löschen sich die zyklischen Frames einer Richtung dabei am anderen redundanten Koppelknoten aus (durch F-Bit Mechanismus). Dennoch erfolgt über die nachfolgenden Koppelknoten eine Verdopplung der Frameanzahl und damit, wie bei einfach gekoppelten Ringen eine Halbierung der Bandbreite für zyklische Profinet-Kommunikation.

Mit dem bisher implementierten Redundanzverfahren für zyklische Frames können lediglich einfache Ringstrukturen realisiert werden, bei denen alle Knoten als Teilnehmer im Ring vorhanden sind. Vom Ring abgesetzte Strukturen (IO-Controller, Profinet-Linie) bzw. gekoppelte Strukturen führen zu Telegrammvervielfältigungen und damit zu Bandbreitenverlusten auf diesen Strecken. Die Nachteile des heutigen Verfahrens sind somit:
- Frameverdopplung beim Ausleiten aus einer Ringtopologie,
- Bandbreitenverluste im Ring bei Multicast-Frames bzw. Frames, deren DA (Destination Address) noch nicht gelernt • worden ist, da diese Frames über beide Ringrichtungen versendet werden und erst durch den Einspeiseknoten aus dem Ring gefiltert werden (F-Bit-Mechanismus),
- hoher Ressourcenbedarf, da alle in den Ring eingespeisten bzw. eingekoppelten zyklischen Frames in einer Filter-Liste gelernt und bei Empfang gefiltert werden müssen (F-Bit-Mechanismus).

Mit heutigen Profinet-Geräten (Switches) ist eine redundante Kopplung mehrerer Ringstrukturen nur mit Hilfe von Software möglich. Dies bedeutet, die Kopplung zwischen benachbarten Ringstrukturen erfolgt nicht direkt im Switch selbst, sondern alle zyklischen Frames, welche in den Nachbar-Ring ausgeleitet werden, müssen über eine Software-Schnittstelle geführt werden. Diese sorgt dann dafür, dass an einem Koppel-Switch nur jeweils ein zyklischer Frame (Original- oder Duplikat-Frame) ausgeleitet wird. Die Einspeisung der zyklischen Frames erfolgt ebenfalls per Software, um nicht einen bereits eingespeisten zyklischen Frame, der über die redundante Koppelstrecke übertragen worden ist, nochmals einzuspeisen.

Die so erreichbare Datenrate ist stark eingeschränkt und entspricht in keiner Weise den geforderten Mengengerüsten. Eine Kopplung über mehrere Ringe hinweg (Reihenschaltung von Ringen), wie dies z.B. in Zugsystemen der Fall ist, kann nur mit größeren Einschränkungen realisiert werden. Anforderungen, wie sie heute aus der Fertigungs- und Prozessindustrie kommen, können derzeit nicht umgesetzt werden.

Aus der US 6,446,131 ist bereits ein Verfahren bekannt, welches duplizierte Frames insbesondere in einer Ringtopologie herausfiltert. Die Frames werden anhand der Source Adresse und der Port Nummer als Duplikate identifiziert.

Der Erfindung liegt die Aufgabe zugrunde, ein verbessertes Verfahren zur Filterung von redundanten Frames in einem Netzwerkknoten eines Netzwerkes anzugeben.

Diese Aufgabe wird bei einem Verfahren gemäß dem Anspruch 1 gelöst,

Die Aufgabe wird weiter durch einen Netzwerkknoten mit den in Anspruch 8 angegebenen Merkmalen gelöst.

Um redundante Netzwerkstrukturen zu unterstützen, sind die Probleme des mehrfachen Ausleitens des redundanten zyklischen Profinet-Frames aus dem Ring sowie die Verhinderung von kreisenden Telegrammen innerhalb eines Rings zu lösen. Beide Probleme können mit dem erfindungsgemäßen Verfahren der "Frame-Auslöschung im Netzwerk" beseitigt werden. Grundlage hierbei ist die Tatsache, dass sich in einem redundanten System (z.B. Ringtopologie) ein über mehrere Wege (typisch 2 Wege) eingespeister Frame an irgendeiner Stelle im Netzwerk wieder begegnet. Die beiden identischen Frames können sich dabei entweder auf der Leitung zwischen zwei benachbarten Netzwerkknoten oder aber genau in einem Netzwerkknoten treffen.

Nutzt man diese Eigenschaft, um den Original- und Duplikat-Frame an der Begegnungsstätte gegeneinander auszulöschen, so werden kreisende Frames im redundanten Netz (typisch: Ring) sowie ein Ausleiten beider Frames (Original- und Duplikat-Frame) an einem Knoten (Switch) verhindert. Ist eine Begegnung beider Frames nicht möglich, so handelt es sich um keine redundante Netztopologie. Ein kreisender Frame bzw. ein mehrfaches Ausleiten kann in diesem Fall grundsätzlich nicht auftreten, und das Konzept der "Frame-Auslöschung im Netzwerk" muss nicht wirken.

Wird nach dem erfindungsgemäßen Verfahren ein zyklischer Frame an einem Port empfangen, so wird, nachdem die MAC-Quelladresse und FrameID eingetroffen sind, in der Sendeliste des Empfangsports nach diesem zyklischen Frame gesucht. Dabei werden alle Sendeaufträge des Ports der Reihe nach durchlaufen und auf Gleichheit bzgl. MAC-Quelladresse und FrameID geprüft. Ist keine Übereinstimmung des empfangenen zyklischen Frames mit den zu sendenden Frames der Sendeliste vorhanden, so ist dieser empfangene zyklische Frame noch nicht über einen anderen Port als Duplikat eingetroffen und kann somit an alle anderen Ports zum Senden weitergeleitet werden bzw. von einer lokalen Applikation empfangen werden. Wird hingegen der zyklische Frame in der Sendeliste gefunden, so wurde das Duplikat bereits über einen anderen Port empfangen und in den eigenen Port zur Weiterleitung eingekettet.

In redundanten Netzstrukturen treffen sich Original- und Duplikat-Frame an irgendeiner Stelle im Netzwerk wieder. Sorgt man dafür, dass an dieser Begegnungsstelle im Netz sich beide Frames gegeneinander auslöschen, so verhindert man ein mehrfaches Ausleiten in eine angrenzende Netzstruktur als auch ein mehrfaches Einspeisen in die eigene Netzstruktur. Dadurch ergeben sich folgende Vorteile:
- Es gibt keine Abhängigkeit der Speicher-Ressourcen von der Netztopologie und dem zu übertragenden Mengengerüst (Anzahl der zyklischen Frames). In den einzelnen Knoten ist lediglich eine Zwischenspeicherung notwendig, welche die lokale Beziehung zweier Nachbarschaftsports widerspiegelt. Die hierfür notwendigen Ressourcen sind konstant und nicht von der Topologie des Gesamtnetzwerkes bzw. der Übertragungsrate (100 MBit, 1 GBit) abhängig.
- Es ist keine Zwischenspeicherung der bereits aus- bzw. eingeleiteten zyklischen Frames und damit kein aufwendiger Such- und Lernalgorithmus innerhalb eines solchen Speichers notwendig, was wiederum kürzere Latenzzeiten der Knoten (Switches) und damit einen höheren Datendurchsatz ermöglicht.
- Es wird jede beliebige Topologie unterstützt. Das Konzept. ist für jede beliebige redundante bzw. nicht redundante Netztopologie geeignet,
- Es ist keine spezifische Parametrierung der Switches notwendig. Jeder Switch, ob innerhalb eines Ringes oder als Koppel-Switch zu einem nachfolgenden Ring, wird gleich parametriert.

In einer vorteilhaften Form der Ausgestaltung wird der zweite Frame anhand des CRC-Wertes auf Fehler überprüft und wird nur bei fehlerfreiem zweiten Frame der erste Frame weder an eine lokale Applikation noch zum Senden an andere Ports des Knotens weitergeleitet und/oder wird bei fehlerhaftem zweiten Frame der zweite Frame nicht gesendet. Auf diese Weise wird der erste Frame nur dann aus dem Netzwerk gefiltert, wenn der zweite Frame richtig übertragen worden ist, bzw. wird, zusätzlich oder alternativ, ein fehlerhafter zweiter Frame aus dem Netzwerk gefiltert.

In einer weiteren vorteilhaften Ausführungsform wird der erste Frame anhand des CRC-Wertes auf Fehler überprüft und wird nur bei fehlerfreiem ersten Frame der zweite Frame nicht gesendet und/oder wird bei fehlerhaftem ersten Frame der erste Frame weder an eine lokale Applikation noch zum Senden an andere Ports des Knotens weitergeleitet. Auf diese Weise wird, genau wie bei der vorigen Ausführungsform, der zweite Frame nur dann aus dem Netzwerk gefiltert, wenn der erste Frame richtig übertragen worden ist, bzw. wird, zusätzlich oder alternativ, ein fehlerhafter erster Frame aus dem Netzwerk gefiltert. Die beiden vorgenannten Ausführungsformen zusammen betrachtet führen zwar, wenn nur ein Frame fehlerhaft ist - erster oder zweiter bzw. Original oder Duplikat - zu einer nur teilweisen Filterung der redundanten Frames, doch wird damit einer Anforderung in hochverfügbaren Netzwerken nach einer möglichst hohen Gewährleistung der Datensicherheit genüge getan.

In einer weiteren vorteilhaften Ausführungsform wird überprüft, ob der zweite Frame vollständig in der Sendeliste gespeichert ist, und wird bei unvollständig gespeichertem zweiten Frame der erste Frame im Empfangsspeicher gespeichert, bis der zweite Frame vollständig gespeichert ist. Dies erfolgt mittels des in vielen Switches standardmäßig implementierten Store-and-forward-Verfahrens, das auch bei einer Überprüfung der Frames auf fehlerfreien Empfang angewendet wird.

In einer weiteren vorteilhaften Ausführungsform wird bei Nichtvorhandensein des zweiten Frames der erste Frame an zumindest einen anderen der Ports des Knotens zum Senden weitergeleitet, wenn der erste Frame nicht ausschließlich für eine lokale Applikation bestimmt ist. Damit werden Frames, die nur an die lokale Applikation adressiert sind - so genannte Unicast-Frames - bei Erreichen ihres Ziels aus dem Netzwerk genommen und nicht mehr an weitere Knoten gesendet. Hingegen werden Multicast- oder Broadcast-Frames, die an mehr als einen Empfänger adressiert sind, über die weiteren im Netzwerk verbundenen Ports des ersten Knotens weitergeleitet.

In einer weiteren vorteilhaften Ausführungsform wird bei Nichtvorhandensein des zweiten Frames der erste Frame an eine lokale Applikation weitergeleitet, wenn der erste Frame für diese lokale Applikation bestimmt ist. Bei schon in der Sendeliste eingetragenem zweiten Frame ist dagegen dieser bereits von der lokalen Applikation empfangen worden.

In einer weiteren vorteilhaften Ausführungsform werden die im Netzwerk verbundenen Ports speziell ausgewiesen und wird bei Weiterleitung des ersten Frames an andere Ports des Knotens zum Senden dieser an alle speziell ausgewiesenen anderen Ports zum Senden weitergeleitet. Damit werden die in einem redundanten Netzwerk verbundenen Ports eines Knotens (auch die Ausleite-Ports) speziell als redundante Ports (R-Ports) ausgewiesen, und ein über einen R-Port empfangener zyklischer Frame wird immer an allen anderen R-Ports weitergeleitet.

In einer weiteren vorteilhaften Ausführungsform werden zumindest die zwei zuletzt gesendeten Frames in einem zusätzlichen Speicherbereich in der Sendeliste gespeichert. Hiermit wird sichergestellt, dass die redundanten Frames auch gefiltert werden, wenn sie sich zwischen zwei Knoten auf der Netzwerkleitung begegnen. Begegnen sich Original- und Duplikat-Frame auf der Leitung, so sind beide Frames bei einer maximalen Leitungslänge zwischen zwei Knoten von 100 m bei 5 ns/m und bei einer Laufzeit durch die PHY-Schicht von 0,2 µs für die Empfangseinrichtung und 0,1 µs für die Sendeeinrichtung maximal (0,5 + 0,3) µs = 0,8 µs versendet, bevor sie beim gegenüberliegenden Empfangsport eintreffen. Bei 100-MBit-Ethernet ist damit ein minimaler Frame (ca. 6 µs) nur teilweise versendet. Es ist somit sichergestellt, dass in den Sendelisten der Ports beide Original-Frames noch eingetragen sind, während das jeweilige Duplikat gerade empfangen wird. Eine Auslöschung ist somit möglich. Bei 1-GBit-Ethernet kann jedoch ein Frame vollständig versendet sein, bevor er am gegenüberliegenden Empfangsport eintrifft. Um in diesem Fall eine sichere Auslöschung von Original- und Duplikat-Frame zu erreichen, ist es notwendig, einen zusätzlichen portspezifischen Zwischenpuffer (mit einer Tiefe von zwei Einträgen) vorzusehen.

In einer weiteren vorteilhaften Ausführungsform
- wird von der Sendeeinrichtung von einem fehlerfrei gesendeten Frame ein Eintrag mit der MAC-Quelladresse, der FrameID und einem Sendezeitpunkt in einer Echoliste gespeichert,
- wird von der Empfangseinrichtung für einen fehlerfrei empfangenen Frame ein Echo-Frame bestehend aus zumindest der MAC-Quelladresse und der FrameID des fehlerfrei empfangenen Frames generiert und in die Sendeliste der Sendeeinrichtung eingetragen,
- wird ein empfangener Echo-Frame nicht weitergeleitet und werden seine MAC-Quelladresse und FrameID mit den Einträgen in der Echoliste verglichen, wobei bei einer Übereinstimmung der betreffende Eintrag in der Echoliste gelöscht wird, und
- wird nach Verstreichen einer Echozeit seit dem Sendezeitpunkt eines in der Echoliste eingetragenen Frames die Weiterleitung sowohl von empfangenen Frames vom Empfangsspeicher zu anderen der Ports als auch von zu sendenden Frames von anderen der Ports zur Sendeliste unterbrochen.

Ein Frame wird nur dann sicher im Netzwerk durch sein Duplikat ausgelöscht, wenn sowohl Original- als auch Duplikat-Frame fehlerfrei übertragen werden. Tritt jedoch irgendwo im Netzwerk ein Fehler (z.B. CRC-Fehler, einseitiger Kabelbruch, Leitungsbruch) auf, so kann dies dazu führen, dass einer der beiden Frames (Original oder Duplikat) fehlt bzw. nicht mehr - als solcher erkannt wird. Der bisherige Auslöschungs-Mechanismus würde dann nicht mehr wirken, und es entstehen kreisende Frames bzw. Mehrfachausleitungen der Frames. Um dies zu verhindern, ist es notwendig, mit geeigneten Mechanismen einen fehlerhaften bzw. ausgefallenen zyklischen Frame zu lokalisieren und entsprechende Maßnahmen im jeweiligen Teilnetzwerk, also am Entstehungsort, einzuleiten.

Hierzu wird die MAC-Quelladresse und FrameID der fehlerfrei gesendeten zyklischen Frames in einer portspezifischen Echoliste abgespeichert. Wird der zyklische Frame mit CRC-Fehler versendet, so erfolgt kein Eintrag des Frames in die Echoliste. Zusätzlich wird der Sendezeitpunkt des zyklischen Frames abgespeichert. Der Empfangsknoten generiert auf jeden korrekt empfangenen zyklischen Frame einen Echo-Frame. Ein nicht korrekt empfangener zyklischer Frame wird-nicht durch einen Echo-Frame quittiert. Der Echo-Frame enthält vorteilhafterweise lediglich die zum Vergleich notwendigen Frame-Informationen und besteht somit nur aus einem Frame-Header ohne Datenbytes. Wird ein Echo-Frame empfangen, so wird dieser grundsätzlich nicht weitergeleitet und es erfolgt der Vergleich der MAC-Quelladresse und FrameID mit den Einträgen in der Echoliste. Ein Treffer zeigt dabei an, dass die Strecke zwischen den Knoten fehlerfrei ist (keine Unterbrechung bzw. Störung). Erkennt der Port, das die Echozeit zwischen dem in der Echoliste abgelegten Sendezeitpunkt und dem tatsächlichen Zeitpunkt verstreicht, ohne das ein entsprechender Echo-Frame eingetroffen ist, so ist die Strecke (Hin- oder Rückleitung) zwischen den beiden Knoten fehlerhaft. In diesem Fall wird am entsprechenden Port die Weiterleitung aller nachfolgenden zyklischen Frames (in Sende- und Empfangsrichtung) unterbrochen. Die lokale Streckenüberwachung arbeitet jedoch weiter. Durch die Unterbrechung des Weiterleitens ("Forwarding-Sperre" ist aktiv) wird verhindert, dass der gegenläufige Duplikat-Frame durch den nun fehlenden Original - Frame kreist, da dieser auf den gesperrten Empfangsport aufläuft und somit nicht weitergeleitet wird. Ein über einen anderen Knoten eingespeister zyklischer Frame läuft von beiden Seiten (Original- und Duplikat-Frame) auf die Forwarding-Sperre auf und wird dort am Empfangsport gefiltert bzw. am Sendeport nicht weitergeleitet. Zusammenfassend müssen dabei von jedem redundanten Port folgende Funktionen erfüllt werden:
- Auf jeden gesendeten zyklischen Frame muss lokal vom gegenüberliegenden Port des Nachbar-Switches ein Echo-Frame zurückgeschickt werden.
- Ein Echo-Frame wird nur dann erzeugt, wenn der zyklische Frame fehlerfrei empfangen worden ist.
- Innerhalb einer Echozeit nach einem gesendeten zyklischen Frame muss dieser als Echo wieder empfangen worden sein.
- Der jeweilige Sendeport speichert die echo-relevanten Framedaten (MAC-Quelladresse, FrameID, Sendezeit) in einem portspezifischen Echo-Ringpuffer (Echoliste).
- Wird bis zum berechneten Zeitpunkt (nach Verstreichen der Echozeit) kein erwarteter Echo-Frame empfangen, so wird die Weiterleitung der zyklischen Frames vom/zum entsprechenden Port an/von alle anderen Ports gesperrt. Der Frame-Empfang bzgl. Echo-Bildung bleibt jedoch für alle nachfolgenden zyklischen Frames erhalten.

In einer weiteren vorteilhaften Ausführungsform wird der von der Empfangseinrichtung generierte Echo-Frame mit der höchsten Priorität in die Sendeliste der Sendeeinrichtung eingetragen. Um die Echo-Frames möglichst direkt zum versendenden Knoten zurückzusenden, werden diese mit höchster Priorität in die Sendeliste eingekettet. Ein Echo-Frame kann daher nur durch einen gerade laufenden Frame verzögert werden.

In einer weiteren vorteilhaften Ausführungsform wird dabei als Echozeit die maximal verstreichende Zeit zwischen Speichern eines Eintrags in der Echoliste und Empfangen des zugehörigen Echo-Frames gewählt. Da ein Echo-Frame bei diesem Ausführungsbeispiel nur durch einen gerade laufenden Frame verzögert werden kann, ist die maximal verstreichende Zeit gegeben durch zweimal einem "Line-Delay" bei der maximalen Leitungslänge (typischerweise bei 5 ns/m und zweimal 100 m entsprechend 1 µs) plus einem "Bridging-Delay", der Latenzzeit im Nachbarswitch (entsprechend der PHY-Laufzeit von 0,3 µs, s.o.) plus der Verzögerungszeit, die aufgrund eines maximalen Frames vor dem Echo-Frame entsteht. Bei einem maximalen Frame von typischerweise 1530 Byte wären dies noch einmal 12,24 µs bei 1-GBit-Ethernet bzw. 122,4 µs bei 100-MBit-Ethernet. Insgesamt ergibt sich damit als Echozeit für 1-GBit-Ethernet 13,54 µs und für 100-MBit-Ethernet 123,7 µs.

In einer weiteren vorteilhaften Ausführungsform werden dabei in der Echoliste bei 100-MBit-Ethernet die letzten 20 Einträge und bei 1-GBit-Ethernet die letzten 22 Einträge gespeichert. Soviele Framedaten müssen maximal abgespeichert werden, wenn man annimmt, dass eine maximale Leitungslänge (100 m) zum Nachbarswitch besteht, dass der Nachbarswitch gerade einen Frame mit maximaler Länge sendet und dass vom sendenden Port nur Frames mit minimaler Länge (64 Byte plus 8 Byte Präambel) bei einem "Inter-Package-Gap" von 96 Bit (12 Byte) gesendet werden. Die maximal zu speichernden Einträge berechnen sich dabei aus der maximalen Verzögerungszeit dividiert durch die Zeit, die zum Senden eines minimalen Frames (plus "Inter-Package-Gap") benötigt wird, d.h. 0,672 µs bei 1-GBit-Ethernet und 6,72 µs bei 100-MBit-Ethernet.

In einer weiteren vorteilhaften Ausführungsform wird die Unterbrechung der Weiterleitung am Ende eines aktuellen Kommunikationszyklus aufgehoben. Dabei wird vorausgesetzt, dass zu diesem Zeitpunkt alle Original- und Duplikat-Frames im Netzwerk übertragen worden sind, ansonsten kann die Aufhebung der Sperre wiederum zu kreisenden zyklischen Frames führen.

In einer weiteren vorteilhaften Ausführungsform werden die redundanten Frames mit einer Zyklus-Nummer versehen, die den Kommunikationszyklus zum Zeitpunkt eines Einspeisens der Frames in das Netzwerk angibt.

In einer weiteren vorteilhaften Ausführungsform wird dabei der erste Frame anhand des CRC-Wertes auf Fehler überprüft und wird nur bei fehlerhaftem Frame und nicht Übereinstimmung der Zyklus-Nummer mit dem aktuellen Kommunikationszyklus weder an eine lokale Applikation noch zum Senden an andere Ports des Knotens weitergeleitet. Dies soll sicherstellen, dass am Zyklusende alle Original- und Duplikat-Frames übertragen worden sind. Es werden also beim Empfang in jedem Switch nur diejenigen zyklischen Frames korrekt (ohne CRC-Fehler) weitergeleitet, die auch im aktuellen Zyklus eingespeist worden sind. Alle anderen zyklischen Frames werden auch mit CRC-Fehler versendet bzw. gefiltert.

In einer weiteren vorteilhaften Ausführungsform werden die redundanten Frames mit einem TTL-Timer ("Time-To-Life"-Zähler) versehen und wird der erste Frame bei einem Wert des TTL-Timers von Null weder an eine lokale Applikation noch zum Senden an andere Ports des Knotens weitergeleitet. Grundsätzlich wird durch den Ablauf des TTL-Timers erreicht, dass ein kreisender zyklischer Frame früher oder später aus dem Netzwerk gefiltert werden kann. Solange der TTL-Timer jedoch nicht abgelaufen ist, wird der kreisende Frame für Beeinträchtigungen in der Ethernet-Kommunikation sorgen. Ein Abbau der Provider-Consumer-Beziehungen und damit eine Störung des Betriebsablaufes sind mit dem TTL-Timer nicht zu vermeiden. Lediglich die Garantie einer "Erholung" des Netzwerkes nach -einer bestimmten Zeit (abhängig vom Initialwert des Timers) kann durch den TTL-Timer gegeben werden. Der TTL-Timer dient jedoch nur als "Absicherung" und sollte aufgrund der Echo-Überwachung nicht ablaufen. Wird aber trotz der lokalen Echo-Überwachung zwischen benachbarten Ethernet-Ports ein zyklischer Frame nicht ausgelöscht bzw. nicht durch die Sperre eines Ring-Ports gefiltert, so führt der dann kreisende zyklische Frame zu einem dauerhaften Überfluten des gesamten Netzwerkes. Eine Nutzdaten- bzw. Management-Kommunikation ist nur noch eingeschränkt bzw. überhaupt nicht mehr möglich. In diesem Fall ist (ohne TTL-Timer) lediglich ein Neustart des Systems die einzige Möglichkeit zur "Reparatur" des Netzwerkes und damit zur Filterung des kreisenden zyklischen Frames. Um dies zu verhindern, wird der "Time-To-Life"-Zähler als weiterer Mechanismus (als Fault-Back) implementiert, der es erlaubt, jeden kreisenden zyklischen Frame nach Ablauf des TTL-Timers zu vernichten. Der TTL-Timer wird in einem TTL-Feld in jedem zyklischen Frame mitgeführt. Der TTL-Timer im zyklischen Frame ist beispielsweise ein 8-Bit-Feld (0-255) und wird durch den Einspeise-Knoten auf einen festen Wert gesetzt.

In einer weiteren vorteilhaften Ausführungsform wird dabei der TTL-Timer des ersten Frames bei Empfang des ersten Frames um Eins dekrementiert. Aufgrund des definierten Wertebereiches des TTL-Timers ist eine maximale Anzahl durchlaufender Switches (Knoten) von typischerweise 255 (bei einem 8-Bit-Feld) möglich.

In einer weiteren vorteilhaften Ausführungsform wird der TTl-Timer des ersten Frames bei Empfang des ersten Frames um Eins dekrementiert, wenn der Netzwerkknoten an mehr als zwei Ports mit anderen Netzwerkknoten des Netzwerkes verbunden ist. Hiermit werden also Koppel-Switches angesprochen, die neben den Verbindungen zum "eigenen" Netzwerkring eine weitere Verbindung zu beispielsweise einem benachbarten Netzwerkring aufweisen, d.h. der TTL-Timer wird nur bei Empfang an einem Koppel-Switch um Eins erniedrigt. Hierbei ist bei genauer Kenntnis der Netztopologie ein exakter TTL-Wert beim Einspeisen einstellbar, da die Anzahl der Koppelknoten vom Einspeise-Ring bis zum Ziel-Ring gezählt und in den zyklischen Frame als TTL-Wert eingetragen werden können. Ein schnelleres Filtern des kreisenden zyklischen Frames kann damit erreicht werden.

Im Folgenden wird die Erfindung anhand des in der Figur dargestellten Ausführungsbeispiels näher beschrieben und erläutert. Es zeigt:
- FIG 1: einen Netzwerkknoten bei Empfang zweier Frames,
- FIG 2: einen Port bei Empfang eines Echo-Frames und
- FIG 3: zwei mehrfach redundant gekoppelte Netzwerkringe.

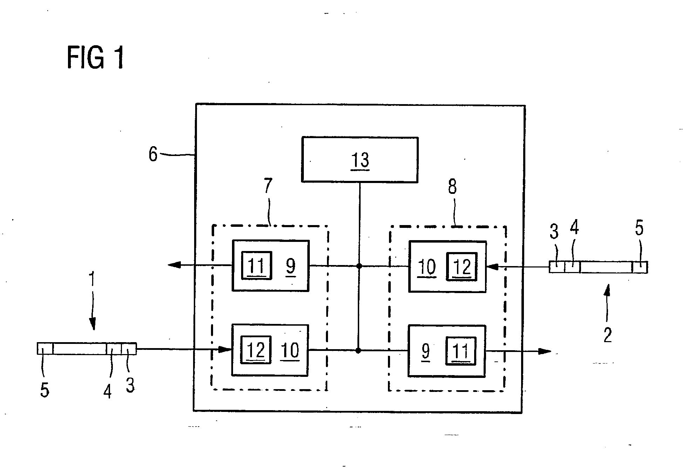

Figur 1 zeigt einen Netzwerkknoten 6 mit einer lokalen Applikation 13 (bzw. lokales API, "Application Programming Interface") und zwei Ports 7, 8. Die beiden Ports 7, 8 weisen je eine Sendeeinrichtung 9 mit einer Sendeliste 11 und eine Empfangseinrichtung 10 mit einem Empfangsspeicher 12 auf. An den Empfangseinrichtungen 10 beider Ports 7, 8 wird je ein Frame 1, 2 empfangen, wobei beide Frames 1, 2 zumindest eine MAC-Quelladresse 3, eine FrameID 4 und einen CRC-Wert 5 aufweisen. Nachdem die MAC-Quelladresse 3 und die FrameID 4 eingetroffen sind, wird in der Sendeliste des jeweiligen Empfangsports 7, 8 nach diesem Frame 1, 2 gesucht. Dabei werden alle Sendeaufträge des Ports 7, 8 in der jeweiligen Sendeliste 11 der Reihe nach durchlaufen und auf Gleichheit bzgl. MAC-Quelladresse 3 und FrameID 4 geprüft. Ist keine Übereinstimmung des empfangenen zyklischen Frames 1, 2 mit den zu sendenden Frames der Sendeliste 11 vorhanden, so ist dieser empfangene zyklische Frame 1, 2 noch nicht über einen anderen Port 8, respektive 7, als Duplikat eingetroffen und kann somit an alle anderen Ports 8, 7 weitergeleitet oder von einer lokalen Applikation 13 empfangen werden - oder beides, je nachdem, ob es sich um einen Unicast-, Multicast- oder Broadcast-Frame handelt.

Im in Fig 1 dargestellten Beispiel soll Frame 2 die Empfangseinrichtung 10 des Ports 8 erreichen, bevor Frame 1 von Port 7 empfangen wird. Das erfindungsgemäße Verfahren, das natürlich ebenso für den in Port 8 empfangenen Frame 2 angewendet wird, wird im Folgenden aus der Sicht des in Port 7 empfangenen Frames 1 erläutert werden, d.h. Frame 1 stellt den an einem ersten Port 7 empfangenen ersten Frame 1 (das "Original") und Frame 2 den an einem anderen Port 8 empfangenen zweiten Frame 2 (das "Duplikat") dar. Nach Empfang der MAC-Quelladresse 3 und der FrameID 4 des ersten Frames 1 am ersten Port 7 wird in der Sendeliste 11 des ersten Ports 7 nach einem zyklischen zweiten Frame 2 mit gleicher MAC-Quelladresse 3 und FrameID 4 gesucht. Da das Duplikat 2 bereits über einen anderen Port 8 empfangen und in den eigenen Port 7 zur Weiterleitung eingekettet wurde, liegt auch ein Eintrag des zweiten Frames 2 in der Sendeliste 11 des ersten Ports 7 vor. Somit wird der erste Frame 1 weder an eine lokale Applikation 13 noch zum Senden an andere Ports 8 des Knotens 6 weitergeleitet und der zweite Frame 2 nicht gesendet, d.h. das Duplikat 2 wird in der Sendeliste 11 des Ports 7 z.B. auf "invalid" gesetzt. Im Ergebnis haben sich beide Frames 1, 2 gegenseitig ausgelöscht, wurden also erfolgreich aus dem Netzwerk gefiltert.

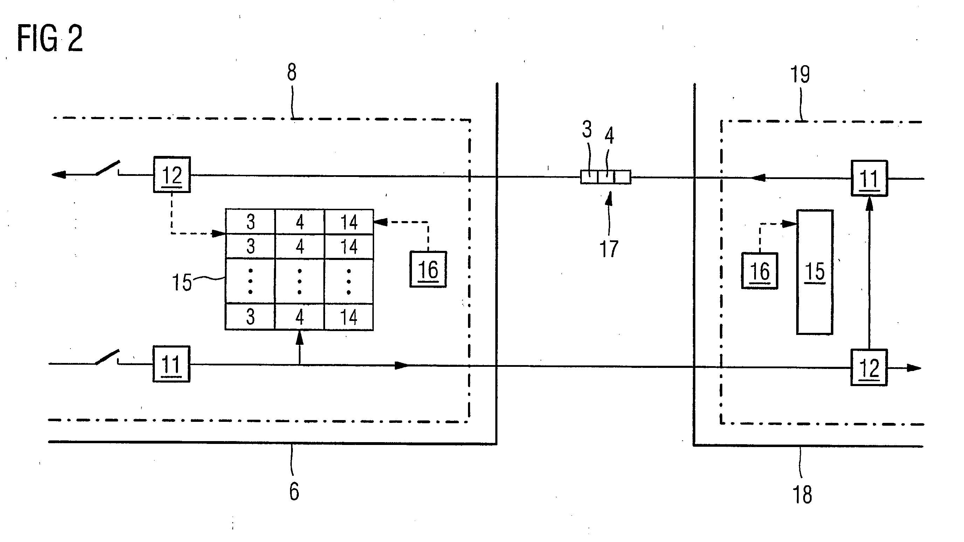

Figur 2 zeigt einen Port 8 eines Netzwerkknotens 6, der mit einem Port 19 eines benachbarten Netzwerkknotens 18 verbunden ist. In einer portspezifischen Echoliste 15 werden von fehlerfrei gesendeten zyklischen Frames die MAC-Quelladresse 3, die FrameID 4 sowie der Sendezeitpunkt 14 gespeichert. Wird der zyklische Frame mit CRC-Fehler versendet, so erfolgt kein Eintrag des Frames in der Echoliste. Der Empfangsknoten 18 generiert auf jeden korrekt empfangenen zyklischen Frame einen Echo-Frame 17. Ein nicht korrekt empfangener zyklischer Frame wird im Knoten 18 nicht durch einen Echo-Frame 17 quittiert. Der Echo-Frame 17 enthält zumindest die zum Vergleich notwendigen Frame-Informationen und besteht somit z.B. nur aus einem Frame-Header mit MAC-Zieladresse, MAC-Quelladresse 3, Typen-Feld und FrameID 4 ohne Datenbytes. Die Framelänge ist damit fest auf 24 bzw. 28 Bytes (inkl. CRC) beschränkt. Um die Echo-Frames 17 möglichst direkt zum versendenden Knoten 6 zurückzusenden, werden diese mit höchster Priorität in die Sendeliste 11 von Knoten 18 eingekettet. Ein Echo-Frame 17 kann daher nur durch einen gerade laufenden Frame verzögert werden.

Trifft der Echo-Frame 17 im Knoten 6 ein, so wird dieser grundsätzlich nicht weitergeleitet und es erfolgt der Vergleich der MAC-Quelladresse 3 und FrameID 4 mit den Einträgen in der Echoliste 15. Ein Treffer in der Liste 15 zeigt dabei an, dass die Strecke zwischen den Knoten 6 und 18 fehlerfrei ist (keine Unterbrechung oder Störung). Erkennt Knoten 6 mittels einer Zeitüberwachung 16, dass eine Echozeit zwischen dem in der Echoliste 15 abgelegten Sendezeitpunkt 14 und dem tatsächlichen Zeitpunkt verstreicht, ohne dass ein entsprechender Echo-Frame 17 eingetroffen ist, so ist die Strecke (Hin- oder Rückleitung) zwischen den Knoten 6 und 18 fehlerhaft. In diesem Fall wird am entsprechenden Port 8 die Weiterleitung aller nachfolgenden zyklischen Frames (in Sendeund Empfangsrichtung) bis zum Ende des Kommunikationszyklus unterbrochen. Der Frame-Empfang bzgl. Echo-Bildung bleibt jedoch für alle nachfolgenden zyklischen Frames erhalten. Dieses entspricht genau der dargestellten Situation: Die Weiterleitung ist unterbrochen (links im Bild dargestellt), und ein Echo-Frame 17 wird von Knoten 18 zu Knoten 6 gesendet; die lokale Streckenüberwachung arbeitet also weiter.

Durch die Unterbrechung der Weiterleitung bis zum Zyklusende ("Forwarding-Sperre" ist aktiv) wird verhindert, dass ein gegenläufiger Duplikat-Frame durch den nun fehlenden Original-Frame kreist, da dieser auf den gesperrten Port 8 von Knoten 6 aufläuft und somit nicht weitergeleitet wird. Ein über einen anderen Knoten 18 eingespeister zyklischer Frame läuft von beiden Seiten auf die Forwarding-Sperre in Knoten 6 auf und wird dort am Empfangsport 8 gefiltert bzw. am Sendeport nicht weitergeleitet.

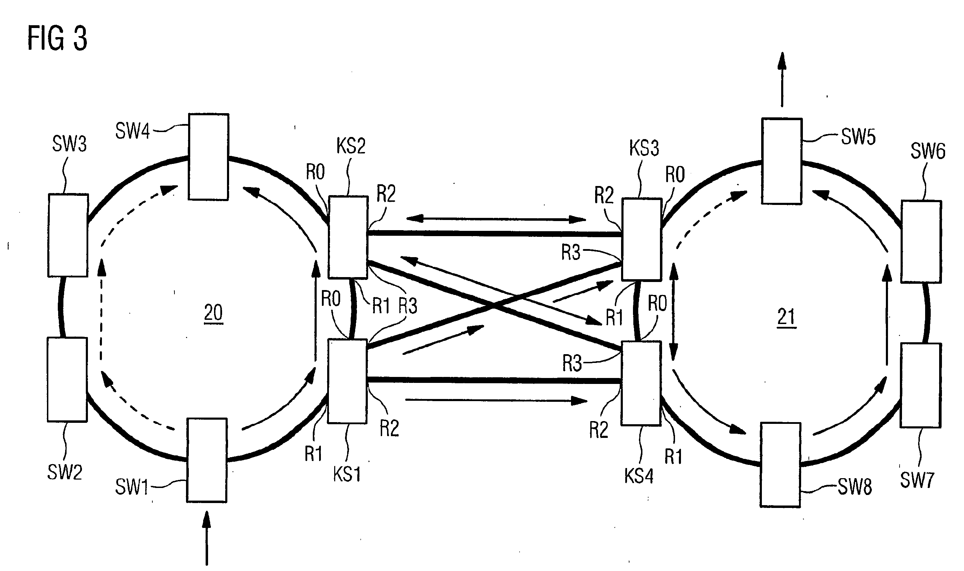

In Figur 3 ist eine mehrfach redundante Kopplung zweier Netzwerkringe 20, 21 dargestellt, wie sie implementiert werden muss, um auch bei Ausfall jeweils eines Koppel-Switches KS1-KS4 in jedem Ring 20, 21 noch ein verfügbares Netzwerk zu garantieren. Ring 20 besteht aus den Switches (Netzwerkknoten) SW1-SW4 sowie den Koppel-Switches KS1 und KS2, Ring 21 wird durch die Switches SW5-SW8 sowie den Koppel-Switches KS3 und KS4 gebildet. Dabei ist jeder der Koppel-Switches KS1-KS4 mit jedem der anderen verbunden, wodurch sich die mehrfach redundante Kopplung der beiden Netzwerkringe 20, 21 ergibt. Die im Netzwerk verbundenen Ports der Switches SW1-SW8 und der Koppel-Switches KS1-KS4 sind dabei speziell als redundante Ports, R-Ports, ausgewiesen, die in der Figur nur bei den Koppel-Switches KS1-KS4 jeweils mit R0-R3 bezeichnet sind.

Über den Netzwerkknoten SW1 in Ring 20 wird ein zyklischer Frame eingespeist, der an den Knoten SW5 in Ring 21 adressiert ist, und in beiden Richtungen als Original- (durchgezogene Pfeile) und Duplikat-Frame (gestrichelte Pfeile) versendet. Über die Koppel-Switches KS1 und KS2 wird der Original-Frame jeweils ausgeleitet und im weiteren Verlauf im Switch SW4 mit dem Duplikat-Frame im Ring 20 ausgelöscht. Der ausgeleitete Original-Frame wird dann im Ring 21 ebenfalls redundant über jeweils beide R-Ports R0 und R1 an den beiden Koppel-Switches KS3 und KS4 eingeleitet. Dabei löschen sich die beiden Frames, die vom Port R1 des Koppel-Switches KS3 und vom Port R0 des Koppel-Switches KS4 eingeleitet wurden, gegenseitig aus, so dass nur die vom Port R0 des Koppel-Switches KS3 und die vom Port R1 des Koppel-Switches KS4 eingeleiteten Frames übrig bleiben, die somit gewissermaßen wiederum einen Original- und einen Duplikat-Frame bilden. Diese laufen entgegengerichtet durch Ring 21 und werden auch beide vom Netzwerkknoten SW5 empfangen, im Knoten SW5 jedoch wird einer vernichtet (Frameauslöschung), so dass nur ein Frame von der lokalen Applikation empfangen wird.

Eine genauere Betrachtung verdient noch das Schicksal der zwischen den Koppel-Switches KS1-KS4 verlaufenden Frames: KS1 erhält als erstes den von Switch SW1 eingespeisten Original-Frame und sendet diesen im nächsten Schritt an alle weiteren Koppel-Switches KS2-KS4, die ihrerseits im wiederum nächsten Schritt den am-jeweiligen Empfangsport empfangenen Frame an allen weiteren R-Ports versenden. Dadurch löschen sich nicht nur, wie oben beschrieben, die Frames zwischen KS3 und KS4 aus, sondern auch die zwischen KS2 und KS3 sowie zwischen KS2 und KS4. Dabei begegnen sich die redundanten Frames jeweils auf der Strecke zwischen den Koppel-Switches KS2-KS4. Dies spielt aber, wie bereits in der Beschreibung erläutert, bei 100-MBit-Ethernet keine Rolle, da die jeweiligen Frames bei Empfang des zugehörigen "Duplikats" noch nicht vollständig versendet sind, d.h. noch in der Sendeliste eingetragen sind, und eine Auslöschung somit erfolgen kann. Im Falle von 1-GBit-Ethernet wird dem Verschwinden eines Frames aus der Sendeliste aufgrund eines vollständigen Versendens durch einen zusätzlichen Zwischenspeicher in der Sendeliste von zumindest zwei Einträgen vorgebeugt, so dass auch hier ein Auslöschen der Frames gewährleistet ist. Dieser zusätzliche Zwischenspeicher kann auch die oben beschriebene Echoliste sein, die alle notwendigen Frameinformationen wie MAC-Quelladresse und FrameID enthält. Im Ergebnis wird durch das erfindungsgemäße Verfahren der Filterung redundanter Frames ein in einem Netzwerkring 20 redundant eingespeister Frame selbst bei einer. mehrfach redundanten Kopplung zu einem benachbarten Netzwerkring 21 nur einmal redundant in diesen eingespeist.

Zusammenfassend betrifft die Erfindung ein Verfahren zur Filterung redundanter Frames, die zumindest eine MAC-Quelladresse, eine FrameID sowie einen CRC-Wert aufweisen, in einem Netzwerkknoten mit zumindest zwei Ports mit jeweils einer Sende- und einer Empfangseinrichtung, wobei die Sendeeinrichtung eine Sendeliste aufweist, in der zu sendende Frames gespeichert werden, und wobei die Empfangseinrichtung einen Empfangsspeicher zum Speichern eines empfangenen Frames aufweist. Um redundante Frames in einem Netzwerkknoten eines Netzwerkes zu filtern, wird vorgeschlagen, dass bei dem genannten Verfahren ein erster Frame an einem der zumindest zwei Ports empfangen wird, nach Empfang der MAC-Quelladresse und der FrameID des ersten Frames in der Sendeliste des einen der zumindest zwei Ports nach einem zweiten Frame mit gleicher MAC-Quelladresse und FrameID gesucht wird und bei Vorhandensein des zweiten Frames der erste Frame weder an eine lokale Applikation noch zum Senden an andere Ports des Knotens weitergeleitet wird und der zweite Frame nicht gesendet wird.

## Patentansprüche

1. Verfahren zur Filterung redundanter Frames (1, 2), die zumindest eine MAC-Quelladresse (3), eine FrameID (4) sowie einen CRC-Wert (5) aufweisen, in einem Netzwerkknoten (6, 18, SW1-SW8, KS1-KS4) mit zumindest zwei Ports (7, 8, 19, R0-R3) mit jeweils einer Sende- (9) und einer Empfangseinrichtung (10), wobei die Sendeeinrichtung (9) eine Sendeliste (11) aufweist, in der zu sendende Frames gespeichert werden, und wobei die Empfangseinrichtung (10) einen Empfangsspeicher (12) zum Speichern eines empfangenen Frames aufweist,
wobei
- ein erster Frame (1) an einem der zumindest zwei Ports (7, 8, 19, R0-R3) empfangen wird,
- nach Empfang der MAC-Quelladresse (3) und der FrameID (4) des ersten Frames (1) in der Sendeliste (11) des einen der zumindest zwei Ports (7, 8, 19, R0-R3) nach einem zweiten Frame (2) mit gleicher MAC-Quelladresse (3) und FrameID (4) gesucht wird und
- bei Vorhandensein des zweiten Frames (2) der erste Frame (1) weder an eine lokale Applikation (13) noch zum Senden an andere Ports (7, 8, 19, R0-R3) des Knotens (6, 18, SW1-SW8, KS1-KS4) weitergeleitet wird und der zweite Frame (2) nicht gesendet wird, und
- der zweite Frame (2) anhand des CRC-Wertes (5) auf Fehler überprüft wird und nur bei fehlerfreiem zweiten Frame (2) der erste Frame (1) weder an eine lokale Applikation (13) noch zum Senden an andere Ports (7, 8, 19, R0-R3) des Knotens (6, 18, SW1-SW8, KS1-KS4) weitergeleitet wird und/oder bei fehlerhaftem zweiten Frame (2) der zweite Frame (2) nicht gesendet wird.

2. Verfahren nach Anspruch 1,
wobei der erste Frame (1) anhand des CRC-Wertes (5) auf Fehler überprüft wird und nur bei fehlerfreiem ersten Frame (1) der zweite Frame (2) nicht gesendet wird und/oder bei fehlerhaftem ersten Frame (1) der erste Frame (1) weder an eine lokale Applikation (13) noch zum Senden an andere Ports (7, 8, 19, R0-R3) des Knotens (6, 18, SW1-SW8, KS1-KS4) weitergeleitet wird.

3. Verfahren nach einem der vorhergehenden Ansprüche,
wobei überprüft wird, ob der zweite Frame (2) vollständig in der Sendeliste (11) gespeichert ist, und bei unvollständig gespeichertem zweiten Frame (2) der erste Frame (1) im Empfangsspeicher (12) gespeichert wird, bis der zweite Frame (2) vollständig gespeichert ist.

4. Verfahren nach einem der vorhergehenden Ansprüche,
wobei bei Nichtvorhandensein des zweiten Frames (2) der erste Frame (1) an zumindest einen anderen der Ports (7, 8, 19, R0-R3) des Knotens (6, 18, SW1-SW8, KS1-KS4) zum Senden weitergeleitet wird, wenn der erste Frame (1) nicht ausschließlich für eine lokale Applikation (13) bestimmt ist.

5. Verfahren nach einem der vorhergehenden Ansprüche,
wobei bei Nichtvorhandensein des zweiten Frames (2) der erste Frame (1) an eine lokale Applikation (13) weitergeleitet wird, wenn der erste Frame (1) für diese lokale Applikation (13) bestimmt ist.

6. Verfahren nach einem der vorhergehenden Ansprüche,
wobei die im Netzwerk (20, 21) verbundenen Ports (R0-R3) speziell ausgewiesen werden und bei Weiterleitung des ersten Frames (1) an andere Ports (R0-R3) des Knotens (SW1-SW8, KS1-KS4) zum Senden dieser (1) an alle speziell ausgewiesenen anderen Ports (R0-R3) zum Senden weitergeleitet wird.

7. Verfahren nach einem der vorhergehenden Ansprüche,
wobei zumindest die zwei zuletzt gesendeten Frames in einem zusätzlichen Speicherbereich in der Sendeliste (11) gespeichert werden.

8. Verfahren nach einem der vorhergehenden Ansprüche,
- wobei von der Sendeeinrichtung (9) von einem fehlerfrei gesendeten Frame ein Eintrag mit der MAC-Quelladresse (3), der FrameID (4) und einem Sendezeitpunkt (14) in einer Echoliste (15) gespeichert wird,
- wobei von der Empfangseinrichtung (10) für einen fehlerfrei empfangenen Frame ein Echo-Frame (17) bestehend aus zumindest der MAC-Quelladresse (3) und der FrameID (4) des fehlerfrei empfangenen Frames generiert und in die Sendeliste (11) der Sendeeinrichtung (9) eingetragen wird,
- wobei ein empfangener Echo-Frame (17) nicht weitergeleitet wird und seine MAC-Quelladresse (3) und FrameID (4) mit den Einträgen in der Echoliste (15) verglichen werden, wobei bei einer Übereinstimmung der betreffende Eintrag in der Echoliste (15) gelöscht wird,
- wobei nach Verstreichen einer Echozeit seit dem Sendezeitpunkt (14) eines in der Echoliste (15) eingetragenen Frames die Weiterleitung sowohl von empfangenen Frames vom Empfangsspeicher (12) zu anderen der Ports (7, 8, 19, R0-R3) als auch von zu sendenden Frames von anderen der Ports (7, 8, 19, R0-R3) zur Sendeliste (11) unterbrochen wird.

9. Verfahren nach Anspruch 8,
wobei der von der Empfangseinrichtung (10) generierte Echo-Frame (17) mit der höchsten Priorität in die Sendeliste (11) der Sendeeinrichtung (9) eingetragen wird.

10. Verfahren nach Anspruch 9,
wobei als Echozeit die maximal verstreichende Zeit zwischen Speichern eines Eintrags in der Echoliste (15) und Empfangen des zugehörigen Echo-Frames (17) gewählt wird.

11. Verfahren nach Anspruch 10,
wobei in der Echoliste (15) bei 100-MBit-Ethernet die letzten 20 Einträge und bei 1-GBit-Ethernet die letzten 22 Einträge gespeichert werden.

12. Verfahren nach einem der Ansprüche 8 bis 11,
wobei die Unterbrechung der Weiterleitung am Ende eines aktuellen Kommunikationszyklusses aufgehoben wird.

13. Verfahren nach einem der vorherigen Ansprüche,
wobei die redundanten Frames (1, 2) mit einer Zyklus-Nummer versehen werden, die den Kommunikationszyklus zum Zeitpunkt eines Einspeisens der Frames (1, 2) in das Netzwerk (20, 21) angibt.

14. Verfahren nach Anspruch 13,
wobei der erste Frame (1) anhand des CRC-Wertes (5) auf Fehler überprüft wird und nur bei fehlerhaftem Frame (1) und nicht Übereinstimmung der Zyklus-Nummer mit dem aktuellen Kommunikationszyklus weder an eine lokale Applikation (13) noch zum Senden an andere Ports (7, 8, 19, R0-R3) des Knotens (6, 18, SW1-SW8, KS1-KS4) weitergeleitet wird.

15. Verfahren nach einem der vorhergehenden Ansprüche,
wobei die redundanten Frames (1, 2) mit einem TTL-Timer ("Time-To-Life"-Zähler) versehen werden und der erste Frame (1) bei einem Wert des TTL-Timers von Null weder an eine lokale Applikation (13) noch zum Senden an andere Ports (7, 8, 19, R0-R3) des Knotens (6, 18, SW1-SW8, KS1-KS4) weitergeleitet wird.

16. Verfahren nach Anspruch 15,
wobei der TTL-Timer des ersten Frames (1) bei Empfang des ersten Frames (1) um Eins dekrementiert wird.

17. Verfahren nach Anspruch 15,
wobei der TTL-Timer des ersten Frames (1) bei Empfang des ersten Frames (1) um Eins dekrementiert wird, wenn der Netzwerkknoten (KS1-KS4) an mehr als zwei Ports (R0-R3) mit anderen Netzwerkknoten (SW1-SW8, KS1-KS4) des Netzwerkes (20, 21) verbunden ist.

18. Netzwerkknoten (6, 18, SW1-SW8, KS1-KS4) mit zumindest zwei Ports (7, 8, 19, R0-R3) mit jeweils einer Sende- (9) und einer Empfangseinrichtung (10), wobei die Sendeeinrichtung (9) eine Sendeliste (11) aufweist, in der zu sendende Frames gespeichert werden, und wobei die Empfangseinrichtung (10) einen Empfangsspeicher (12) zum Speichern eines empfangenen Frames (1, 2) aufweist,
**dadurch gekennzeichnet,**
**dass** der Netzwerkknoten (6, 18, SW1-SW8, KS1-KS4) Mittel zur Durchführung eines Verfahrens nach einem der Ansprüche 1 bis 17 aufweist.

## Claims

1. Method for filtering redundant frames (1, 2) comprising at least one MAC source address (3), a frame ID (4) and a CRC value (5), in a network node (6, 18, SW1-SW8, KS1-KS4) comprising at least two ports (7, 8, 19, R0-R3) which each comprise a transmitting device (9) and a receiving device (10), wherein the transmitting device (9) comprises a transmission list (11) in which frames to be transmitted are stored, and wherein the receiving device (10) comprises a receiving memory (12) for storing a received frame,
wherein
- a first frame (1) is received by one of the at least two ports (7, 8, 19, R0-R3),
- after reception of the MAC source address (3) and the frame ID (4) of the first frame (1) in the transmission list (11) of said port (7, 8, 19, R0-R3), a second frame (2) with the same MAC source address (3) and frame ID (4) is sought and
- if the second frame (2) is present, the first frame (1) is not forwarded to a local application (13) nor is said first frame (1) forwarded to send to other ports (7, 8, 19, R0-R3) of the node (6, 18, SW1-SW8, KS1-KS4) and the second frame (2) is not sent, and
- the second frame (2) is checked for errors on the basis of the CRC value (5) and, only if the second frame (2) is fault-free, the first frame (1) is not forwarded to a local application (13), nor is said first frame (1) forwarded to send to other ports (7, 8, 19, R0-R3) of the node (6, 8, SW1-SW8, KS1-KS4) and/or if the second frame (2) is faulty, the second frame (2) is not sent.

2. Method according to claim 1, wherein the first frame (1) is checked for errors, on the basis of the CRC value (5) and, only if the first frame (1) is fault-free, the second frame (2) is not sent and/or, if the first frame (1) is faulty, the first frame (1) is not forwarded to a local application (13), nor is said first frame (1) forwarded to send to other ports (7, 8, 19, R0-R3) of the node (6, 18, SW1-SW8, KS1-KS4).

3. Method according to one of the preceding claims, wherein it is checked whether the second frame (2) is stored completely in the transmission list (11) and, if the second frame (2) is incompletely stored, the first frame (1) is stored in the receiving memory (12) until the second frame (2) is completely stored.

4. Method according to one of the preceding claims, wherein if the second frame (2) is not present, the first frame (1) is forwarded to at least one of the other ports (7, 8, 19, R0-R3) of the node (6, 18, SW1-SW8, KS1-KS4) for sending if the first frame (1) is not exclusively destined for a local application (13).

5. Method according to one of the preceding claims, wherein in the absence of the second frame (2), the first frame (1) is forwarded to a local application (13) if the first frame (1) is destined for this local application (13).

6. Method according to one of the preceding claims, wherein the ports (R0-R3) bound into the network (20, 21) are specifically identified and when the first frame (1) is forwarded to other ports (R0-R3) of the node (SW1-SW8, KS1-KS4) for sending, said first frame (1) is forwarded to all the specifically identified other ports (R0-R3) for sending.

7. Method according to one of the preceding claims, wherein at least the two most recently sent frames are stored in an additional memory region in the transmission list (11).

8. Method according to one of the preceding claims,
- wherein, from a faultlessly transmitted frame, an entry with the MAC source address (3), the frame ID (4) and a transmission time point (14) is stored in an echo list (15) by the transmitting device (9),
- wherein, for a faultlessly received frame, an echo frame (17) comprising at least the MAC source address (3) and the frame ID (4) of the faultlessly received frame is generated by the receiving device (10) and entered in the transmission list (11) of the transmitting device (9),
- wherein a received echo frame (17) is not forwarded and the MAC source address (3) and the frame ID (4) thereof are compared with the entries in the echo list (15), wherein given a match, the relevant entry in the echo list (15) is deleted,
- wherein, after expiry of an echo time since the transmission time point (14) of a frame entered in the echo list (15), the forwarding both of received frames from the receiving memory (12) to others of the ports (7, 8, 19, R0-R3) and of frames to be sent from others of the ports (7, 8, 19, R0-R3) to the transmission list (11) is interrupted.

9. Method according to claim 8, wherein the echo frame (17) generated by the receiving device (10) is entered with the highest priority in the transmission list (11) of the transmitting device (9).

10. Method according to claim 9, wherein the maximum elapsed time between storing an entry in the echo list (15) and receiving the associated echo frame (17) is chosen as the echo time.

11. Method according to claim 10, wherein in the echo list (15) for a 100 Mbit Ethernet, the last 20 entries are stored and, for a 1Gbit Ethernet, the last 22 entries are stored.

12. Method according to one of the claims 8 to 11, wherein the interruption of the forwarding at the end of a current communication cycle is lifted.

13. Method according to one of the preceding claims, wherein the redundant frames (1, 2) are provided with a cycle number which gives the communication cycle at the time point of feeding the frames (1, 2) into the network (20, 21).

14. Method according to claim 13, wherein the first frame (1) is checked for errors using the CRC value (5) and, only if the frame (1) is faulty and the cycle number does not match the current communication cycle, the frame (1) is not forwarded to a local application (13), nor forwarded to send to other ports (7, 8, 19, R0-R3) of the node (6, 18, SW1-SW8, KS1-KS4).

15. Method according to one of the preceding claims, wherein the redundant frames (1, 2) are provided with a TTL ("time-to-live") timer and if the TTL timer has a value of zero, the first frame (1) is not forwarded to a local application (13), nor forwarded to send to other ports (7, 8, 19, R0-R3) of the node (6, 18, SW1-SW8, KS1-KS4).

16. Method according to claim 15, wherein the TTL timer of the first frame (1) is decremented by one on receipt of the first frame (1).

17. Method according to claim 15, wherein the TTL timer of the first frame (1) is decremented by one on receipt of the first frame (1) if the network node (KS1-KS4) is linked at more than two ports (R0-R3) to other network nodes (SW1-SW8, KS1-KS4) of the network (20, 21).

18. Network node (6, 18, SW1-SW8, KS1-KS4) comprising at least two ports (7, 8, 19, R0-R3) each comprising a transmitting device (9) and a receiving device (10), wherein the transmitting device (9) comprises a transmission list (11) in which the frames to be sent are stored, and wherein the receiving device (10) comprises a receiving memory (12) for storing a received frame (1, 2), **characterised in that** the network node (6, 18, SW1-SW8, KS1-KS4) comprises means for carrying out a method as claimed in one of the claims 1 to 17.

## Revendications

1. Procédé de filtrage de trames redondantes (1, 2), qui comportent au moins une adresse source MAC (3), un ID de trame (4) et une valeur CRC (5), dans un noeud de réseau (6, 18, SW1-SW8, KS1-KS4) avec au moins deux ports (7, 8, 19, R0-R3) avec respectivement un dispositif émetteur (9) et un dispositif récepteur (10), le dispositif émetteur (9) comportant une liste d'émission (11) dans laquelle sont stockées les trames à émettre et le dispositif de réception (10) comportant une mémoire de réception (12) pour stocker une trame reçue,
- une première trame (1) étant reçue à l'un des au moins deux ports (7, 8, 19, R0-R3) ;
- après la réception de l'adresse source MAC (3) et de l'ID de trame (4) de la première trame (1), une deuxième trame (2) ayant la même adresse source MAC (3) et le même ID de trame (4) étant recherchée dans la liste d'émission (11) de l'un des au moins deux ports (7, 8, 19, R0-R3) et
- en présence de la deuxième trame (2), la première trame (1) n'étant retransmise ni à une application locale (13) ni pour émission à d'autres ports (7, 8, 19, R0-R3) du noeud (6, 18, SW1-SW8, KS1-KS4) et la deuxième trame (2) n'étant pas émise et
- la deuxième trame (2) étant vérifiée quant à des erreurs à l'aide de la valeur CRC (5) et la première trame (1) n'étant retransmise ni à une application locale (13) ni pour émission à d'autres ports (7, 8, 19, R0-R3) que si la deuxième trame (2) est exempte d'erreur, et/ou la deuxième trame (2) n'étant pas émise si la deuxième trame (2) est erronée.

2. Procédé selon la revendication 1, la première trame (1) étant vérifiée quant à des erreurs à l'aide de la valeur CRC (5) et la deuxième trame (2) n'étant pas émise uniquement si la première trame (1) est exempte d'erreur et/ou la première trame (1) n'étant retransmise ni à une application locale (13) ni pour émission à d'autres ports (7, 8, 19, R0-R3) du noeud (6, 18, SW1-SW8, KS1-KS4) si la première trame (1) est erronée.

3. Procédé selon l'une des revendications précédentes, dans lequel il est vérifié si la deuxième trame (2) est entièrement stockée dans la liste d'émission (11) et, si la deuxième trame (2) n'est pas entièrement stockée, la première trame (1) est stockée dans la mémoire de réception (12) jusqu'à ce que la deuxième trame (2) soit entièrement stockée.

4. Procédé selon l'une des revendications précédentes, la première trame (1), en l'absence de la deuxième trame (2), étant retransmise pour émission à au moins un autre des ports (7, 8, 19, R0-R3) du noeud (6, 18, SW1-SW8, KS1-KS4) si la première trame (1) n'est pas exclusivement destinée à une application locale (13).

5. Procédé selon l'une des revendications précédentes, la première trame (1), en l'absence de la deuxième trame (2), étant retransmise à une application locale (13) si la première trame (1) est destinée à cette application locale (13).

6. Procédé selon l'une des revendications précédentes, les ports (R0-R3) reliés dans le réseau (20, 21) étant spécialement identifiés et, s'il y a retransmission de la première trame (1) à d'autres ports (R0-R3) du noeud (SW1-SW8, KS1-KS4) pour émission, celle-ci (1) est retransmise pour émission à tous les autres ports (R0-R3) spécialement identifiés.

7. Procédé selon l'une des revendications précédentes, au moins les deux trames émises en dernier lieu étant stockées dans une zone de mémoire additionnelle de la liste d'émission (11).

8. Procédé selon l'une des revendications précédentes,
- le dispositif émetteur (9) stockant dans une liste écho (15) une entrée relative à une trame émise sans erreur avec l'adresse source MAC (3), l'ID de trame (4) et un instant d'émission (14) ;
- le dispositif récepteur (10) générant, pour une trame reçue sans erreur, une trame écho (17) composée d'au moins l'adresse source MAC (3) et de l'ID de trame (4) de la trame reçue sans erreur et l'enregistrant dans la liste d'émission (11) du dispositif émetteur (9) ;
- une trame écho reçue (17) n'étant pas retransmise et son adresse source MAC (3) et son ID de trame (4) étant comparés avec les entrées de la liste écho (15), l'entrée concernée étant supprimée de la liste écho (15) en cas de coïncidence ;
- après l'écoulement d'un temps d'écho depuis l'instant d'émission (14) d'une trame enregistrée dans la liste écho (15), il y a interruption de la retransmission, tant de trames reçues, de la mémoire de réception (12) vers d'autres des ports (7, 8, 19, R0-R3) , que de trames à émettre, d'autres des ports (7, 8, 19, R0-R3) vers la liste d'émission (11).

9. Procédé selon la revendication 8, la trame écho (17) générée par le dispositif récepteur (10) étant enregistrée avec la priorité la plus élevée dans la liste d'émission (11) du dispositif émetteur (9).

10. Procédé selon la revendication 9, le temps maximal qui s'écoule entre le stockage d'une entrée dans la liste écho (15) et la réception de la trame écho associée (17) étant choisi comme temps d'écho.

11. Procédé selon la revendication 10, les 20 dernières entrées étant stockées dans la liste écho (15) dans le cas d'un Ethernet 100 Mbits et les 22 dernières entrées étant stockées dans ladite liste dans le cas d'un Ethernet 1 Gbit.

12. Procédé selon l'une des revendications 8 à 11, l'interruption de la retransmission à la fin d'un cycle de communication actuel étant supprimée.

13. Procédé selon l'une des revendications précédentes, les trames redondantes (1, 2) étant pourvues d'un numéro de cycle qui indique le cycle de communication à l'instant d'une injection des trames (1, 2) dans le réseau (20, 21).

14. Procédé selon la revendication 13, la première trame (1) étant vérifiée quant à des erreurs à l'aide de la valeur CRC (5) et n'étant retransmise ni à une application locale (13) ni pour émission à d'autres ports (7, 8, 19, R0-R3) du noeud (6, 18, SW1-SW8, KS1-KS4) que si la trame (1) est erronée et si le numéro du cycle ne correspond pas au cycle de communication actuel.

15. Procédé selon l'une des revendications précédentes, les trames redondantes (1, 2) étant pourvues d'un compteur TTL (compteur Time To Life) et la première trame (1), pour une valeur nulle du compteur TTL, n'étant retransmise ni à une application locale (13) ni pour émission à d'autres ports (7, 8, 19, R0-R3) du noeud (6, 18, SW1-SW8, KS1-KS4).

16. Procédé selon la revendication 15, le compteur TTL de la première trame (1) étant décrémenté de 1 à la réception de la première trame (1).

17. Procédé selon la revendication 15, le compteur TTL de la première trame (1) étant décrémenté de 1 à la réception de la première trame (1) si le noeud de réseau (KS1-KS4) est relié en plus de deux ports (R0-R3) à d'autres noeuds de réseau (SW1-SW8, KS1-KS4) du réseau (20, 21).

18. Noeud de réseau (6, 18, SW1-SW8, KS1-KS4) avec au moins deux ports (7, 8, 19, R0-R3) avec respectivement un dispositif émetteur (9) et un dispositif récepteur (10), le dispositif émetteur (9) comportant une liste d'émission (11) dans laquelle des trames à émettre sont stockées et le dispositif récepteur (10) comportant une mémoire de réception (12) pour stocker une trame reçue (1, 2), **caractérisé en ce que** le noeud de réseau (6, 18, SW1-SW8, KS1-KS4) comporte des moyens pour exécuter un procédé selon l'une des revendications 1 à 17.
